# EUROPÄISCHE PATENTSCHRIFT

(11) **EP 3 819 165 B1**
(45) Veröffentlichungstag und Bekanntmachung des Hinweises auf die Patenterteilung: **22.05.2024**
(21) Anmeldenummer: 20202282.8
(22) Anmeldetag: 16.10.2020
(51) Int. Cl.: B60N 2/75

(54) **AUSSTATTUNGSVORRICHTUNG FÜR EIN FAHRZEUG**
INTERIOR FEATURE FOR A VEHICLE
DISPOSITIF D'ÉQUIPEMENT POUR UN VÉHICULE

(30) Priorität: 11.11.2019 DE 102019130399
(43) Veröffentlichungstag der Anmeldung: 12.05.2021
(73) Patentinhaber: GRAMMER AG, 92289 Ursensollen (DE)
(72) Erfinder: NUSS, Ralph, 92284 Poppenricht (DE)
(74) Vertreter: Roche, von Westernhagen & Ehresmann

(56) Entgegenhaltungen:
- DE-A1- 4 227 871
- DE-A1-102008 056 290
- DE-C1- 19 933 429
- KR-A- 20060 015 893

## Beschreibung

Die Erfindung betrifft eine Ausstattungsvorrichtung für Fahrzeuge. Fahrzeug ist im Sinne der Erfindung ein Land-, Luft-, oder Wasserfahrzeug.

Eine solche Ausstattungsvorrichtung ist z.B. eine Armlehne für einen Fahrzeugsitz. Die Armlehne umfasst eine Basis und eine relativ zu der Basis schwenkbare Armauflage.

Aus offenkundiger Vorbenutzung ist eine Armlehne mit einer relativ zu einer Basis schwenkbaren Armauflage bekannt. Die Armlehne ist mit einer Verriegelungsvorrichtung ausgestattet, umfassend eine der Basis zugeordnete fest angeordnete erste Zahnstruktur und eine der Armauflage zugeordnete zweite Zahnstruktur, die an einem bewegbaren Riegel ausgebildet ist. Wenn die Zahnstrukturen in Eingriff sind, befindet sich die Verriegelungsvorrichtung in der Riegelposition und wenn die Zahnstrukturen außer Eingriff sind, befindet sich die Verriegelungsvorrichtung in der Löseposition. Indem der Riegel mittels einer Betätigungsvorrichtung bewegbar ist kann die erste Zahnstruktur außer Eingriff mit der zweiten Zahnstruktur bewegt werden. Auf diese Weise war es möglich, die Neigung der Armauflage in unterschiedlichen Positionen - in durch die Verzahnungen vorgegebenen Schritten - festzustellen. Eine solche Armlehne ist aus DE4227871 bekannt.

Es war Aufgabe der Erfindung eine Ausstattungsvorrichtung mit einem relativ zu einer Basis schwenkbaren Schwenkteil zu schaffen, welche eine Verriegelung des Schwenkteils in unterschiedlichen Gebrauchspositionen ermöglicht und wobei die Eigenschaften der Verriegelung, wie z.B. manuelle und / oder automatische Verstellung zwischen der Riegelposition und der Löseposition, stufenlose oder gestufte Verriegelung, ohne großen Konstruktionsaufwand geändert werden können.

Die Aufgabe wurde gelöst mit einer Ausstattungsvorrichtung mit den Merkmalen des Anspruchs 1.

Das Ausstattungsteil umfasst eine Basis sowie ein um eine Schwenkachse in eine erste Schwenkrichtung und in eine zweite Schwenkrichtung zwischen einer ersten Endposition und einer zweiten Endposition relativ zu der Basis schwenkbares Schwenkteil. Die Ausstattungsvorrichtung umfasst eine zwischen einer Riegelposition und einer Löseposition bewegbare Verriegelungsvorrichtung zum Verriegeln der Schwenkbewegung des Schwenkteils in wenigstens eine Richtung. D.h., die Verriegelungsvorrichtung kann die Bewegung des Schwenkteils in der Riegelposition in beide Schwenkrichtungen oder alternativ lediglich in eine Schwenkrichtung verhindern. In der Löseposition ist eine Bewegung des Schwenkteils in beide Schwenkrichtungen möglich.

Die Verriegelungsvorrichtung umfasst der Basis zugeordnete erste Verriegelungsmittel und dem Schwenkteil zugeordnete zweite Verriegelungsmittel. Der Begriff Verriegelungsmittel soll keine Begrenzung auf formschlüssig zusammenwirkende Strukturen bedeuten.

Die Ausstattungsvorrichtung umfasst eine Betätigungsvorrichtung zum automatischen und / oder manuellen Verstellen der Verriegelungsvorrichtung zwischen der Riegelposition, in welcher die ersten Verriegelungsmittel und die zweiten Verriegelungsmittel in Eingriff sind und der Löseposition, in welcher die Verriegelungsmittel außer Eingriff sind. Löseposition kann im Sinne der Erfindung nicht lediglich bedeuten, dass sich die Verriegelungsmittel vollständig außer Eingriff befinden. Ein Verhältnis der Verriegelungsmittel, welcher ein Drehen des Rades ermöglicht, wie z.B. ein Schleifverhältnis, ist ebenfalls in der Löseposition denkbar.

Die einen Verriegelungsmittel umfassen wenigstens ein um eine Drehachse drehbares Rad, mit ersten Sperrflächen. Das Rad kann an dem Schwenkteil oder an der Basis angeordnet sein. Durch eine geeignete Auswahl des Raddurchmessers können die Verriegelungskräfte beeinflusst werden. Die anderen Verriegelungsmittel umfassen einen zwischen einer Riegelposition und einer Löseposition bewegbaren Riegel mit zweiten Sperrflächen und können an dem Schwenkteil oder an der Basis angeordnet sein. Wenn in der Riegelposition die Sperrflächen in Eingriff stehen, wird eine Bewegung des Rades zumindest in eine Drehrichtung verhindert. Z.B. wird in der Riegelposition eine Bewegung des Rades in beide Drehrichtungen verhindert.

Die Ausstattungsvorrichtung umfasst eine Übertragungsvorrichtung mit Basis oder dem Schwenkteil zugeordneten ersten Übertragungsmitteln, die mit zweiten Übertragungsmitteln des Rades in Eingriff stehen, um bei einer Schwenkbewegung des Schwenkteils einen Drehung des Rades zu bewirken. Die Drehbewegung des Rades ist z.B. proportional zur Schwenkbewegung des Schwenkteils. Zwischen den ersten Übertragungsmitteln und den zweiten Übertragungsmitteln ist z.B. eine Übersetzung ausgebildet. In diesem Fall ist es z.B. möglich, mit einer relativ geringen Bremskraft an der Sperrfläche des Rades eine große Haltekraft zu erzeugen, welche das Schwenkteil daran hindert, zu schwenken. Die anderen Verriegelungsmittel umfassen wenigstens einen Riegel mit zweiten Sperrflächen, welcher derart angeordnet ist, dass die zweiten Sperrflächen in der Riegelposition in Eingriff und in der Löseposition außer Eingriff mit den ersten Sperrflächen sind.

Die einen Sperrflächen umfassen z.B. wenigstens eine V-förmig konkave Flächenstruktur und die anderen Sperrflächen wenigstens eine V-förmig konvexe Flächenstruktur. Die Winkel der V-förmigen Flächenstrukturen sind derart ausgebildet, dass bei einem Eingriff der ersten Sperrflächen und der zweiten Sperrflächen eine Keilwirkung entsteht. Konvex ist hier im Sinne von vorragenden konisch zulaufenden Flächen und konkav im Sinne von einer Aussparung mit konisch zulaufenden Flächen zu verstehen.

Alternativ können z.B. die ersten Sperrflächen und die zweiten Sperrflächen von zusammenwirkenden Reibflächen gebildet sein.

Gemäß einer anderen Alternative sind die zusammenwirkenden Sperrflächen von einer Verzahnung des Rades sowie einer Verzahnung des Riegels gebildet, wobei die Verzahnung des Riegels mit der Verzahnung des Rades lösbar in Eingriff gebracht werden kann.

Die ersten Übertragungsmittel sind z.B. von einer ersten Zahnstruktur und die zweiten Übertragungsmittel von einer zweiten Zahnstruktur gebildet. Jede der Zahnstrukturen ist z.B. als Zahnrad oder als Zahnsegment ausgebildet. Mittels geeigneter Auswahl der Verzahnungen kann einen beliebige Übersetzung vorgesehen werden.

Eine der Zahnstrukturen ist z.B. bewegbar ausgebildet, insbesondere schwenkbar, und weist eine Anschlagfläche auf, die von einer Rückstellvorrichtung gegen eine Gegenfläche der Basis belastet ist. Auf diese Weise werden die Übertragungsmittel an der Basis gehalten, bis eine die Kraft der Rückstellvorrichtung übersteigende Gegenkraft die Übertragungsmittel außer Kontakt mit der Gegenfläche bewegt. Das ist z.B. der Fall, wenn das Schwenkteil in der Riegelposition in Richtung der zweiten Endposition bewegt wird.

In der ersten Endposition und / oder in der zweiten Endposition steht z.B. eine Anschlagfläche des Schwenkteils mit einer Begrenzungsfläche der Basis in Kontakt. D.h., dass z.B. in der ersten Endposition eine erste Anschlagfläche mit einer ersten Begrenzungsfläche und in der zweiten Endposition eine zweite Anschlagfläche mit einer zweiten Begrenzungsfläche der Basis in Kontakt steht.

Die Betätigungsvorrichtung weist z.B. eine von dem Benutzer außen an der Ausstattungsvorrichtung manuell mittels eines Schalters betätigbare Betätigung auf, mit welcher die Verriegelungsvorrichtung zwischen der Riegelposition und der Löseposition verstellbar ist. Wenn das Schwenkteil z.B. von einer Armauflage einer Armlehne gebildet ist, kann die Betätigung z.B. an einem vorderen Ende der Armauflage angeordnet sein, so dass sie für den Benutzer gut zugänglich ist. Die Betätigungsvorrichtung kann eine Übertragungsvorrichtung mit wenigstens einem Bewegungsübertrager umfassen, mit welcher die Bewegung der Betätigung auf die Bewegung des Riegels übertragen wird, um eine zwischen der Betätigung und dem Riegel ausgebildete Distanz zu überbrücken.

Alternativ oder zusätzlich zu der manuellen Betätigung umfasst die Betätigungsvorrichtung z.B. eine Steuerung, mit den ersten Verriegelungsmitteln zugeordneten ersten Steuermitteln und den zweiten Verriegelungsmitteln zugeordneten zweiten Steuermitteln, wobei die Steuerung derart ausgebildet ist, dass sie die Verriegelungsvorrichtung in Abhängigkeit der Position des Schwenkteils zwischen der Riegelposition und der Löseposition bewegt.

Die Steuerung ist z.B. derart ausgebildet, dass wenn sich die Verriegelungsvorrichtung in der Riegelposition befindet, das Schwenkteil bei einer Bewegung in die erste Schwenkrichtung z.B. frei bewegbar ist und bei einer Bewegung in die zweite Schwenkrichtung wird eine Bewegung verhindert. Eine Rückbewegung wird z.B. dadurch ermöglicht, dass bei einer Bewegung des Schwenkteils in die erste Schwenkrichtung über einen ersten Umkehrpunkt der Steuerung hinaus die Verriegelungsvorrichtung von der Steuerung in die Löseposition verstellt wird, so dass das Schwenkteil in die zweite Schwenkrichtung schwenkbar ist bis das Schwenkteil einen zweiten Umkehrpunkt der Steuerung passiert. Bei dem Passieren des zweiten Umkehrpunktes wird die Verriegelungsvorrichtung von der Steuerung in die Riegelposition verstellt und das Schwenkteil kann dann wieder lediglich in die erste Schwenkbewegung frei bewegt werden. Die Umkehrpunkte liegen z.B. in der Nähe der ersten Gebrauchsposition und der zweiten Gebrauchsposition.

Die Steuerung kann z.B. eine Steuerkurve und einen Führungsstift umfassen, welcher mit der Steuerkurve in Eingriff steht. Z.B. ist die Steuerkurve an dem Rad ausgebildet und der Führungsstift ist mit dem Riegel derart bewegungsverbunden, dass aufgrund einer Bewegung des Führungsstiftes der Riegel in Eingriff oder außer Eingriff mit dem Rad bewegbar ist.

Gemäß einer Ausführungsform ist die Ausstattungsvorrichtung von einer Armlehne und das Schwenkteil von einer schwenkbaren Armauflage gebildet.

Die relevante Gesamthaltekraft bzw. das gesamte Haltemoment der Verriegelungsvorrichtung wird beeinflusst durch folgende Parameter:
- Rückstellkraft der Rückstellvorrichtung der Verriegelungsvorrichtung in die Riegelposition
- der internen Übersetzung zwischen den Zahnstrukturen der Übertragungsvorrichtung
- einer evtl. Reibpaarung zwischen den Sperrflächen
- einem evtl. Keilwinkel der Sperrflächen
- dem Durchmesser der Sperrfläche
- der Position der Schwenkachse des Riegels relativ zur Position der Sperrflächen sowie zu der Rotationsachse des Rades.
- in Abhängig von der Einstellung der o.g. Parameter kann das je nach Drehrichtung in eine erste Drehrichtung des Rades kraftverstärkend und in eine zweite Drehrichtung kraftmindernd in Bezug auf die Rückstellkraft der Rückstellvorrichtung der Verriegelungsvorrichtung wirken oder in eine erste Drehrichtung kraftmindernd und in eine zweite Drehrichtung kraftverstärkend in Bezug auf die Rückstellkraft der Rückstellvorrichtung wirken oder auch in eine erste Drehrichtung selbsthemmmend mit beliebigen Sicherheitsfaktor und in eine zweite Drehrichtung kraftmindernd in Bezug auf die Rückstellkraft der Rückstellvorrichtung wirken.

Die sich ergebenden Betätigungskräfte und -wege der Entriegelung gering. Das System kann je nach Auslegung auch belastet entriegelt werden. Da die o.g. Parameter in Sperrrichtung verstärkend wirken; aber die Entriegelung erleichtern.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Es zeigen:
Fig. 1 eine perspektivische Darstellung einer Ausstattungsvorrichtung in Form einer Armlehne von schräg vorne, wobei eine Verkleidung der Armlehne nicht dargestellt ist und wobei eine Armauflage der Armlehne in einer etwa horizontalen Position dargestellt ist,
Fig. 2 eine perspektivische Darstellung der Armlehne gemäß Fig. 1 von schräg hinten,
Fig. 3 eine Draufsicht auf die Armlehne,
Fig. 4 eine Seitenansicht der Armlehne, wobei ein Tragteil der Armauflage gläsern dargestellt ist,
Fig 5a eine Schnittdarstellung gemäß Schnittlinie A - A in Fig. 4,
Fig. 5b eine Ausschnittdarstellung gemäß Ausschnittlinie E in Fig. 5a,
Fig. 6 eine Schnittdarstellung gemäß Schnittlinie B - B in Fig. 5a,
Fig. 7 eine Schnittdarstellung gemäß Schnittlinie C - C in Fig. 5a,
Fig. 8a eine Schnittdarstellung in Anlehnung an Fig. 5a, wobei sich die Verriegelungsvorrichtung in der Löseposition befindet,
Fig. 8b eine Ausschnittdarstellung gemäß Ausschnittlinie F in Fig. 8a,
Fig. 9 eine Schnittdarstellung gemäß Schnittlinie D - D in Fig. 8a,
Fig. 10 eine Schnittdarstellung wobei zusammenwirkende Anschläge der Basis und der Armauflage erkehnnbar sind, welche die erste Endpposition und die zweite Endposition der Armauflage definieren,
Fig. 11 eine Schnittdarstellung in Anlehnung an Fig. 6 in der unteren Endposition,
Fig. 12 eine Schnittdarstellung in Anlehnung an Fig. 7 in der unteren Endposition, die im vorliegenden Fall zugleich die unterste Gebrauchsposition ist,
Fig. 13 eine Schnittdarstellung in Anlehnung an Fig. 11 in einer obersten Gebrauchsposition,
Fig. 14 eine Schnittdarstellung in Anlehnung an Fig. 12 in der obersten Gebrauchsposition,
Fig. 15 eine Schnittdarstellung in Anlehnung an Fig. 13 in der oberen Endposition,
Fig. 16 eine Schnittdarstellung in Anlehnung an Fig. 14 in der oberen Endposition.
Fig. 17 ein zweites Ausführungsbeispiel der Armlehne, welches sich von dem ersten Ausführungsbeispiel im Wesentlichen durch eine Umkehr der Zuordnung der Komponenten zwischen Armauflage und Basis unterscheidet,
Fig. 18 eine Schnittdarstellung eines drittes Ausführungsbeispiels der Armlehne, welches sich von dem ersten Ausführungsbeispiel lediglich durch die Betätigung der Verriegelungsvorrichtung unterscheidet, wobei sich die Armauflage in einer horizontalen Position befindet,
Fig. 19 die Armlehne in Anlehnung an Fig. 18, wobei sich die Armauflage in der oberen Gebrauchsposition befindet,
Fig. 20 die Armlehne gemäß Fig. 18, wobei sich die Armauflage in der unteren Gebrauchsposition befindet, welche auch die untere Endposition ist,
Fig. 21 die Armlehne in Anlehnung an Fig. 18, wobei die Armauflage in der oberen Endposition angeordnet ist.

Die Ausstattungsvorrichtung ist im vorliegenden Ausführungsbeispiel eine Armlehne eines Fahrzeugsitzes, welche insgesamt in den Fig. mit dem Bezugszeichen 10 bezeichnet ist. Die Armlehne 10 umfasst eine Basis 11, die z.B. karosseriefest angeordnet ist sowie eine Armauflage 12, die Schwenkteil im Sinne der Erfindung ist.

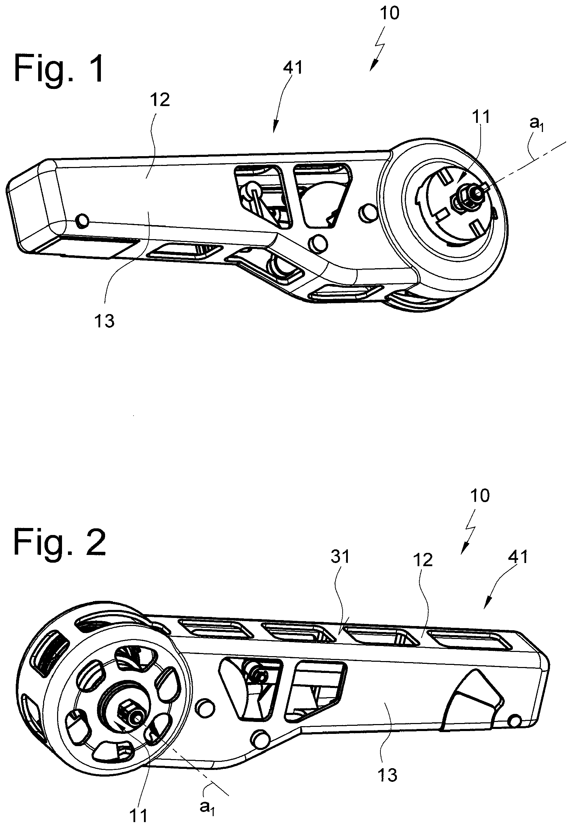

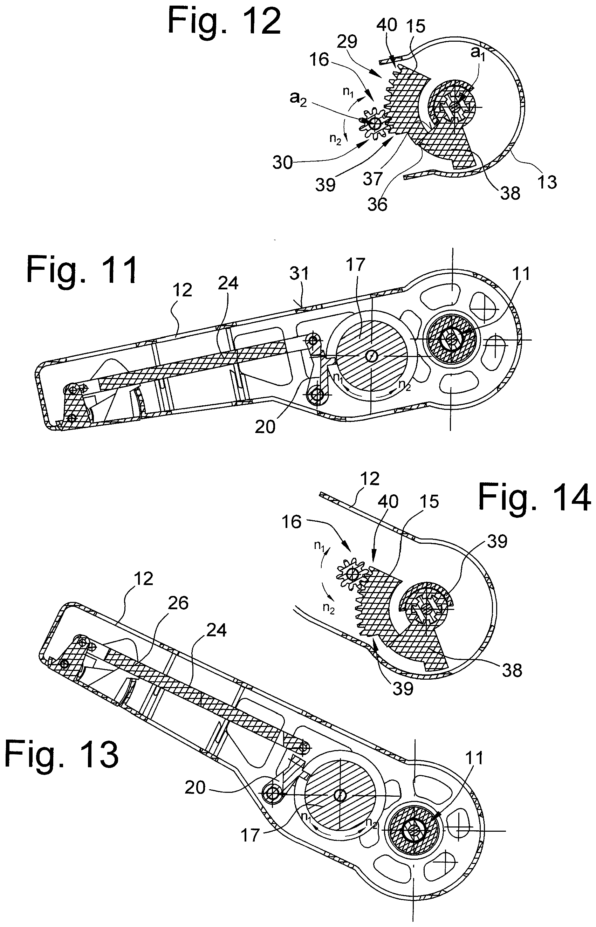

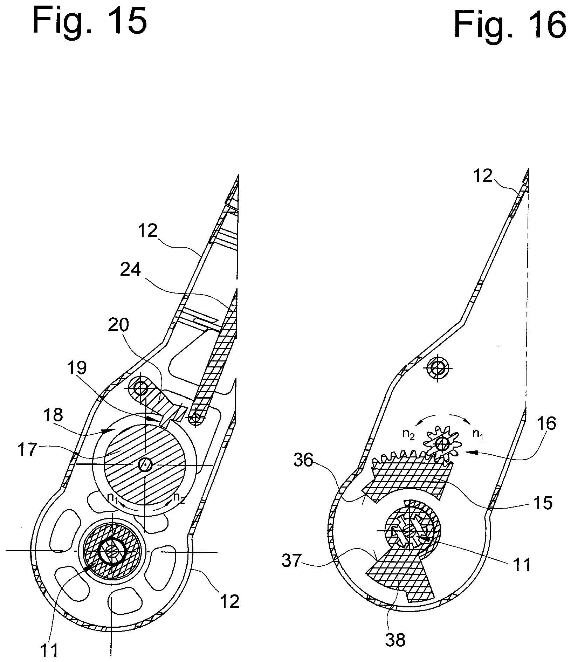

In den Fig. 1 bis 3 ist die Armlehne 10 ohne eine Verkleidung, d.h. ohne Polster, Bezug oder Kunststoffaußenhaut oder ähnliches, dargestellt. Die Armauflage 12 ist um eine Schwenkachse a1 relativ zu der Basis 11 in die Richtungen u1 und u2 schwenkbar zwischen einer in Fig. 11 dargestellten unteren ersten Endposition und einer in Fig. 15 dargestellten, maximal nach oben geschwenkten, zweiten Endposition. Eine zwischen der ersten und der zweiten Endposition angeordnete mittlere Position ist in den Fig. 1 bis 9 dargestellt.

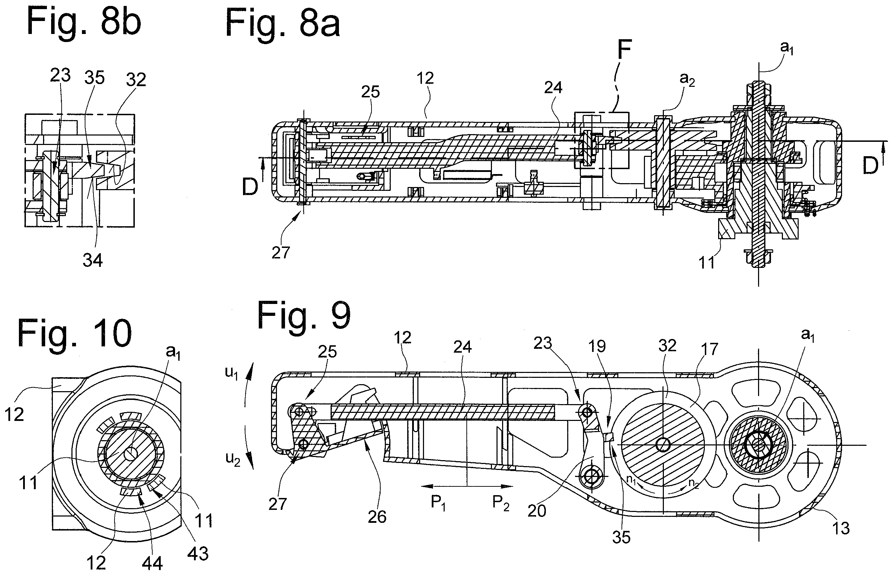

Die Endpositionen sind durch den Kontakt von einem Anschlag 43 der Basis 11 und einem Anschlag 44 der Armauflage 12 definiert, wobei die Anschläge lediglich in Fig. 10 zu erkennen sind. Die Armauflage 12 umfasst ein gehäuseartiges Tragteil 13, welches eine Armauflagefläche 41 ausbildet.

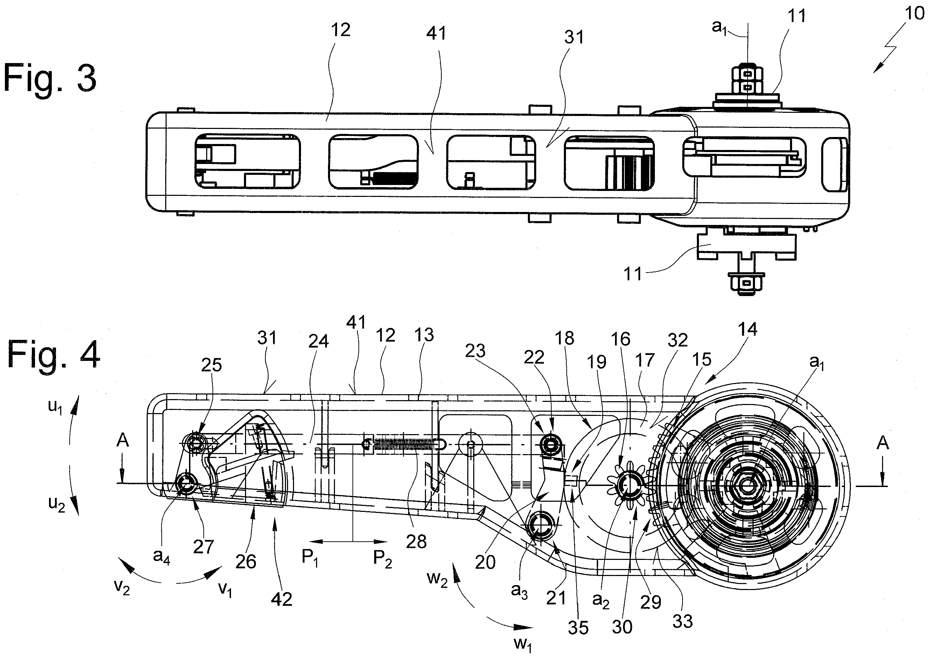

In Fig. 4 ist das Tragteil 13 transparent dargestellt, so dass Komponenten einer Verriegelungsvorrichtung 14 der Armlehne 10 erkennbar sind. Die Verriegelungsvorrichtung 14 umfasst erste Verriegelungsmittel 18, die einem Rad 17 zugeordnet sind, und zweite Verriegelungsmittel 19, die im vorliegenden Ausführungsbeispiel der Armauflage 12 zugeordnet sind, die aber gemäß einer alternativen Ausführung auch an der Basis 11 gehalten sein könnten. Das Rad 17 ist relativ zu der Armauflage 12 in die Richtungen n1 und n2 um die Drehachse a2 drehbar gelagert.

Die Verriegelungsvorrichtung 14 umfasst erste Übertragungsmittel in Form eines Zahnkreissegments 15, das an der Basis 11 gehalten ist, und zweite Übertragungsmittel in Form eines Zahnrades 16. Zwischen den ersten und zweiten Übertragungsmitteln ist eine Übersetzung ausgebildet, die eine leichte Bremskraft begünstigt. Das Zahnkreissegment 15 ist im vorliegenden Ausführungsbeispiel bewegbar ausgebildet, es könnte aber gemäß einer alternativen Ausführung auch unbeweglich relativ zu der Basis 11 angeordnet sein. Auf die Funktion, die mit der Bewegbarkeit des Zahnkreissegments 15 einhergeht, wird weiter unten eingegangen.

Das Zahnkreissegment 15 steht mit den zweiten Übertragungsmitteln in Form eines Zahnrades 16 ständig in Eingriff. Das Zahnrad 16 ist fest mit dem Rad 17 drehverbunden, welches um die Drehachse a2 drehbar an der Armauflage 12 gelagert ist. Das Rad 17 weist die ersten Verriegelungsmittel 18 auf, die mit den zweiten Verriegelungsmitteln 19 eines Riegels 20 in Form eines Hebels zusammenwirken, der mit einem Endbereich 21 um eine Schwenkachse a3 schwenkbar an der Armauflage 12 gelagert ist. Über die Länge des Hebelarms des Riegels 20 kann die Kraft beeinflusst werden, mit welcher die zweiten Verriegelungsmittel gegen die ersten Verriegelungsmittel gedrückt werden. Ein dem Endbereich 21 gegenüberliegender Endbereich 22 des Riegels 20 bildet ein Schwenkgelenk 23 mit einem Bewegungsübertrager 24 in Form einer Stange. Der Bewegungsübertrager 24 ist mit einem Schwenkgelenk 25 mit einer Betätigung 26 in Form eines schwenkbaren Hebels verbunden, der seinerseits ein Schwenkgelenk 27 mit einer Schwenkachse a4 mit der Armauflage 12 bildet. Die Betätigung 26 ist Teil einer Betätigungsvorrichtung 42.

Eine Rückstellvorrichtung 28, hier in Form einer Feder, belastet den Bewegungsübertrager 24 derart, dass die zweiten Verriegelungsmittel 19 des Riegels 20 in Eingriff mit den ersten Verriegelungsmitteln 18 belastet werden (siehe die Fig. 4, 5a, 5b und 6). Wenn die ersten Verriegelungsmittel 18 mit den zweiten Verriegelungsmitteln 19 in der Riegelposition in Eingriff sind, kann sich das Rad 17 nicht relativ zu der Armauflage 12 drehen. D.h., eine Zahnstruktur 30 des Zahnrades 16 kann nicht auf einer Zahnstruktur 29 des Zahnkreissegments 15 abrollen. Die Armauflage 12 kann daher nicht in Richtung u2 bewegt werden.

In den Fig. 4 bis 7 ist die Armauflage in einer Position gezeigt, in welcher eine Armauflagefläche 31 etwa horizontal angeordnet ist und sich die Verriegelungsvorrichtung 14 in der Riegelposition befindet.

Um die Neigung der Armauflage 12 zu verstellen, wird die Betätigung 26, um die Schwenkachse a4 in Richtung v1 geschwenkt, wobei der Bewegungsübertrager 24 sich in Richtung p1 bewegt und dabei den Riegel 20 in Richtung w1 schwenkt. Dabei geraten die Verriegelungsmittel 18 und 19 außer Eingriff (siehe die Fig. 8a, 8b und 9) und die Verriegelungsvorrichtung 14 befindet sich in der Löseposition. Bei Entlastung der Betätigung bewegt die Rückstellvorrichtung 28 den Bewegungsübertrager in Richtung p2 und darüber den Riegel 20 in Richtung w2 und die Betätigung 26 in Richtung v2.

In der Löseposition kann sich das Rad 17 relativ zu der Armauflage 12 drehen, so dass die Verzahnung 30 auf der Verzahnung 29 abrollen kann und die Armauflage 12 bezüglich ihrer Neigung in Richtung u1 oder u2 in unterschiedliche Gebrauchspositionen verstellt werden kann.

Die ersten Verriegelungsmittel 18 sind im vorliegenden Ausführungsbeispiel von konkav V-förmig zueinander ausgebildeten oder konisch zulaufenden, umlaufenden Flächen 32 an einer Stirnseite 33 des Rades 17 gebildet. Die zweiten Verriegelungsmittel 19 sind von zu den Flächen 32 komplementären, konvex V-förmig zueinander ausgebildeten bzw. konisch aufeinander zulaufende Flächen 34 eines Vorsprungs 35 des Hebels 20 gebildet, wobei die Flächen 32 und 34 derart geneigt sind, dass eine Keil-Wirkung entsteht, die in der Riegelposition, d.h. im Eingriff der Flächen 32 und 34, eine stufenlose Arretierung ermöglicht, die eine Bewegung des Rades 17 zumindest in eine Drehrichtung verhindert. Die Verriegelungsmittel 18 und 19 verhindern bei dem vorliegenden Ausführungsbeispiel in der Riegelposition bei gleichen oder unterschiedlichen Werkstoffen der Flächen 32 und 34 sicher ein Drehen des Rades 17. Es versteht sich von selbst, dass die konvexe Fläche 34 und die konkave Fläche 32 jeweils entweder dem Riegel 20 oder dem Rad 17 zugeordnet werden können, dass also eine Umkehrung der hier dargestellten Verhältnisse der Flächen ebenfalls möglich ist.

Alternativ könnten die Verriegelungsmittel 18 und 19 zur Verriegelung der Armauflage 12 z.B. auch Reibflächen an dem Hebel 20 und dem Rad 17 umfassen oder z.B. Formschlussmittel, z.B. Verzahnungen, an dem Hebel 20 und dem Rad 17. Diese können gestuft oder feinverzahnt; ratschend oder beidseitig verriegelnd ausgebildet sein.

Gemäß der Fig. 11 und 12 wurde die Armauflage 12 bezüglich der Fig. 8a und 9, die eine etwa horizontale Anordnung der Armauflagefläche 31 darstellt, in Richtung u2 nach unten in die erste Endposition verstellt. Diese entspricht der unteren Gebrauchsposition. Das Zahnrad 16 befindet sich in dieser Position der Armauflage 12 an einem Endbereich 39 der Zahnstruktur 29. Die Armauflagefläche 31 ist nach unten geneigt. In den Fig. 13 und 14 ist eine Gebrauchsposition gezeigt, bei welcher die Neigung der Armauflage 12 maximal nach oben in Richtung u1 verstellt wurde. Die in den Fig. 13 und 14 gezeigte Position der Armauflage 12 ist die oberste Gebrauchsposition. Das Zahnrad 16 befindet sich in dieser Position der Armauflage 12 an einem Endbereich 40 der Zahnstruktur 29. Die Fig. 15 und 16 zeigen eine Nichtgebrauchsposition.

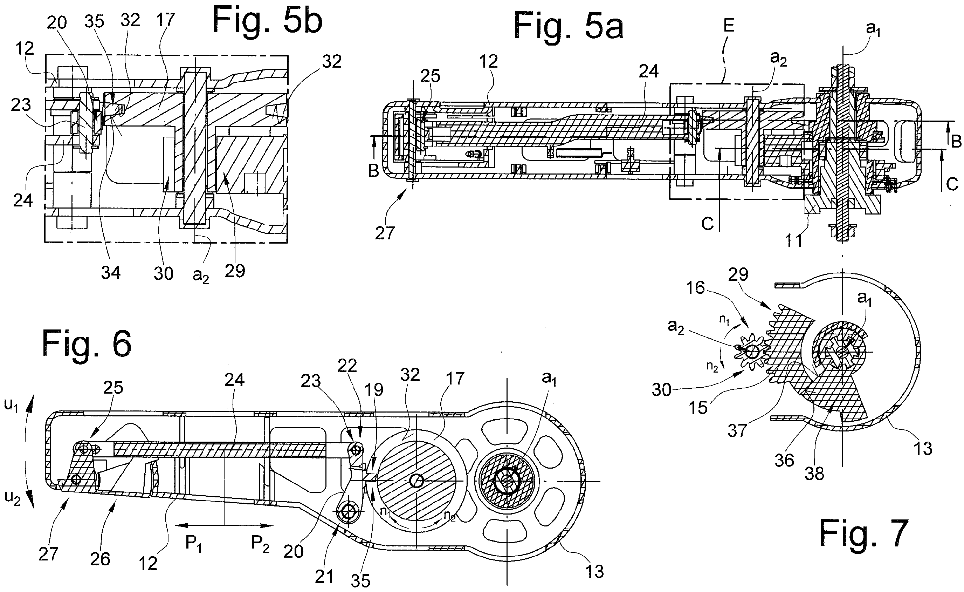

Das Zahnkreissegment 15 ist um die Schwenkachse a1 in die Richtungen u1 und u2 drehbar ausgebildet. Von nicht dargestellten Andrückmitteln ist es in Richtung u1 belastet. Aus diesem Grund liegt eine Anschlagfläche 36 des Zahnkreissegments 15 an einer Gegenfläche 37 einer relativ zu der Basis 11 unbewegbaren Wand 38 an (siehe die Fig. 7, 11 und 13). Die Anschlagfläche 36 des Zahnkreissegments 15 bewegt sich daher nicht außer Kontakt mit der Gegenfläche 37, wenn in der Löseposition - im Falle, dass die Armauflage zwischen der unteren Gebrauchsposition und der oberen Gebrauchsposition bewegt wird - das Zahnrad 16 mit seiner Verzahnung 30 auf der Verzahnung 29 des Zahnkreissegments 15 abrollt.

Wenn in der Riegelposition der Verriegelungsvorrichtung 14 in einer beliebigen Gebrauchsposition der Armauflage 12, d.h. in der ersten Gebrauchsposition, der zweiten Gebrauchsposition oder zwischen den beiden vorgenannten Positionen, die Armauflage 12 entgegen der Rückstellkraft der Andrückmittel, z.B. einer Feder, in Richtung u1 belastet wird, kann die Armauflage 12 in Richtung u1 bewegt werden, bis gemäß Fig. 16 der mit der Armauflage 12 drehfest verbundene Anschlag 44 (lediglich in Fig. 10 dargestellt) mit einer Anschlagfläche an einer Begrenzungsfläche des Anschlags 43 der Basis 11 anschlägt, wodurch die zweite Endposition definiert ist. Dabei bewegt sich die Baugruppe aus Zahnkreissegment 15, Rad 17 und Riegel 20 insgesamt - ohne Relativbewegung der genannten Komponenten zueinander - entgegen der Kraft der zweiten Andrückmittel in die zweite Endposition. Die erste Endposition ergibt sich, wie oben erwähnt, ebenfalls aufgrund des Kontaktes der Anschläge 43 und 44.

Bei einer Rückbewegung kann die Armauflage 12 in Richtung u2 bewegt werden, bis die Anschlagfläche 36 an der Gegenfläche 37 anschlägt. Die Neigung der Armauflage 12, ist in diesem Fall dieselbe, wie vor dem Aufwärtsschwenk in Richtung u2, weil sich die Relativposition zwischen der Zahnstruktur 30 des Zahnrades 16 und der Zahnstruktur 29 des Zahnkreissegments 15 nicht geändert hat. Diese Relativposition kann nur durch Verstellen der Verriegelungsvorrichtung 14 in die Löseposition geändert werden.

Wenn das Zahnkreissegment 15 gemäß einer alternativen Ausführung fest, d.h. unbewegbar relativ zu der Basis 11 ausgebildet wäre, könnte die Armauflage 12 in der Riegelposition nicht in Richtung u1 bewegt werden. Es wäre in jedem Fall ein Bewegen der Verriegelungsvorrichtung 14 in die Löseposition zur Bewegung der Armauflage 12 notwendig. Darauf wird später noch eingegangen.

Gemäß einer alternativen, nicht dargestellten Ausführungsform könnte aber das Zahnkreissegment 15 auch fest relativ zu der Basis 11 angeordnet sein. Bei dieser Ausführung müsste in jedem Fall für die Verstellung der Armauflage 14 zwischen der ersten und der zweiten Endposition die Verriegelungsvorrichtung 14 in die Löseposition bewegt werden.

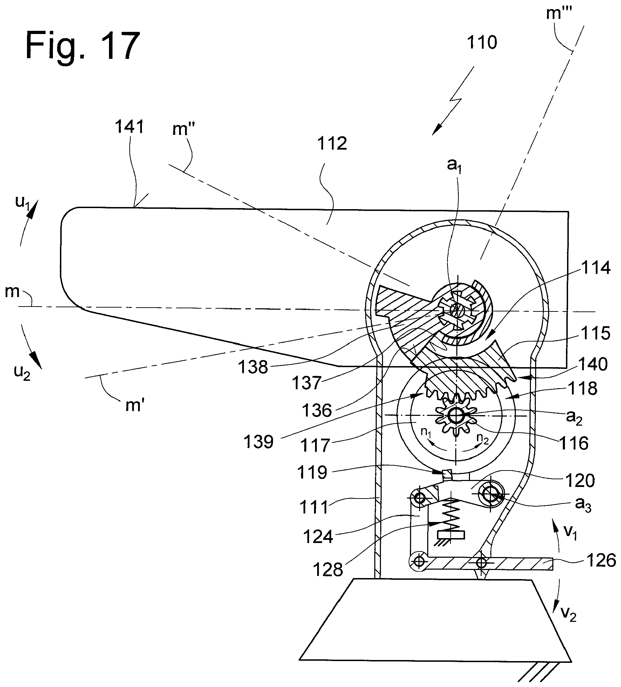

Ein zweites Ausführungsbeispiel ist in Fig. 17 dargestellt. Die aus dem ersten Ausführungsbeispiel bekannten Bezugszeichen wurden dabei um 100 erhöht. Bezüglich des ersten Ausführungsbeispiels gemäß der Fig. 1 bis 15 handelt es sich bei dem zweiten Ausführungsbeispiel um eine Umkehr der der Armauflage 12 sowie der Basis 11 zugeordneten Komponenten.

In Fig. 17 ist eine Armlehne 110 mit einer Armauflage 112 mit Armauflagefläche 141 dargestellt. Die Armlehne 110 umfasst eine Verriegelungsvorrichtung 114, welche ein Kreissegement 115 und eine Wand 138 aufweist. Ein Rad 117 ist um eine Schwenkachse a2 drehbar an der Basis 111 befestigt. Ein Riegel 120 ist von einer Rückstellvorrichtung 128 derart belastet, dass Verriegelungsmittel 119 des Riegels 120 in Eingriff mit Verriegelungsmitteln 118 des Rades 117 gedrückt werden. Die Verriegelungsmittel 118 und 119 wirken in gleicher Weise zusammen, wie bei dem ersten Ausführungsbeispiel. Indem eine Betätigung 126 in Richtung v1 geschwenkt wird, können über den Bewegungsübertragen 124 die Verriegelungsmittel 119 außer Eingriff mit den Verriegelungsmitteln 118 bewegt werden. Bei Entlastung der Betätigung 126 wird der Riegel 120 von der Feder 128 wieder derart geschwenkt, dass sich die Verriegelungsmittel 119 in Eingriff mit den Verriegelungsmitteln 118 bewegen.

Die Wand 138 ist fest, d.h. relativ zu der Armauflage 112 nicht bewegbar an der Armauflage 112 befestigt. Nicht dargestellte Andrückmittel halten das Zahnkreissegment 115 mit einer Anschlagfläche 136 an einer Gegenfläche 137 der Wand 138. Gemäß Fig. 16 befindet sich die Verriegelungsvorrichtung 114 in einer Löseposition, d.h. das Zahnkreissegment 115 kann sich relativ zu dem Zahnrad 116 derart bewegen, dass das Zahnrad 116 an dem Endbereich 139 oder an dem Endbereich 140 des Zahnkreissegments 115 angeordnet ist.

Die Armauflage 112 lässt sich in gleicher Weise, wie bei dem ersten Ausführungsbeispiel aus der in Fig. 16 dargestellten etwa horizontalen Position mit der Mittellinie m in eine unterste Gebrauchsposition, die in Fig. 16 durch die Mittelachse m' angedeutet ist, in eine oberste Gebrauchsposition mit der Mittelachse m" oder in eine obere Endposition m‴ bewegen.

Befindet sich die Verriegelungsvorrichtung 114 in der Riegelposition ist das Zahnkreissegment 115 relativ zu dem Zahnrad 116 festgelegt. Bei einem Moment in Richtung u1 auf die Armauflage 112 kann durch Überwindung der Federkraft der nicht dargestellten Andrückmittel die Armauflage 112 in Richtung u1 bewegt werden, wobei sich der Kontakt zwischen der Anschlagfläche 136 und der Gegenfläche 137 löst. Die Armauflage 112 kann dann in Richtung u1 in die obere Endposition bewegt werden.

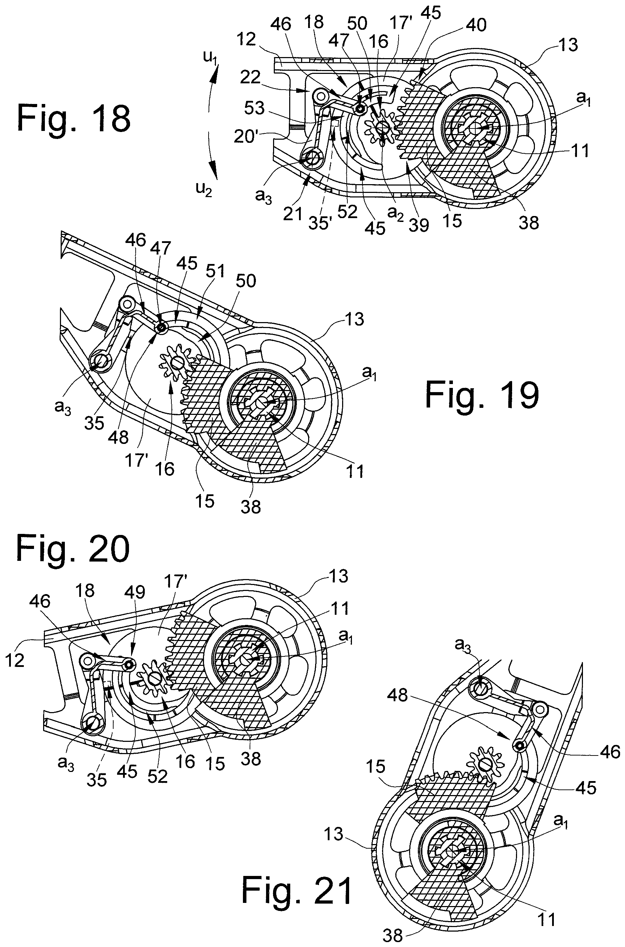

In den Fig. 18 bis 21 ist ein drittes Ausführungsbeispiel dargestellt, welches sich von dem ersten Ausführungsbeispiel lediglich dadurch unterscheidet, dass eine Verriegelungsvorrichtung 14' nicht mittels der Betätigung 26, sondern in Abhängigkeit der Position der Armauflage 12' von einer Steuerung 53 gesteuert wird. Die aus dem ersten Ausführungsbeispiel bekannten Bezugszeichen wurden mit einem Hochkomma versehen.

Die Armauflage 12' befindet sich gemäß Fig. 18 in einer etwa horizontalen Gebrauchsposition. Der Riegel 20` umfasst bei diesem Ausführungsbeispiel an seinem Endberich 22 einen Lenkerbereich 46. Der Lenker umfasst außerdem einen Führungsstift 47 welcher mit einer Steuerkurve 45 in Eingriff ist. Über den Führungsstift 47 und den Lenkerbereich 46 steuert die Steuerkurve den Riegel 20' zwischen der Riegelposition und der Löseposition.

Das Reibverhältnis oder das Klemmverhältnis zwischen den Verriegelungsmitteln 18 des Rades 17' und den Verriegelungsmitteln 19 des Vorsprungs 35 ist derart ausgebildet, dass die Armauflage 12' in der Riegelposition in Richtung u1 bewegbar ist, wobei sich das Rad 17' mit Schlupf relativ zu dem Vorsprung 35 des Riegels 20' bewegt. In Richtung u2 ist kein Schlupf zwischen dem Vorsprung 35 und dem Rad 17' möglich, so dass die Armauflage 12' in Richtung u2 in der Riegelposition fest verriegelt ist.

Die Federkraft der Andrückmittel, welche das Zahnkreissegment 15 in Kontakt mit der Wand 38 halten, ist so groß dass der Kontakt in der Riegelposition bei einer Bewegung der Armauflage 12' aus der Position gemäß Fig. 18 in Richtung u1 erhalten bleibt.

Bei der Bewegung der Armauflage 12` zwischen der Position gemäß Fig. 18 und der Position gemäß Fig. 19 rollt die Zahnstruktur 30 des Zahnrades 16 auf der Zahnstruktur 29 des Zahnkreissegments 15 ab, bis sich gemäß Fig. 20 das Zahnrad 16 an dem ersten Endbereich des Zahnkreissegments 15 befindet. Bei der Bewegung dreht sich auch das fest mit dem Zahnrad 16 verbundene Rad 17' soweit relativ zu dem Führungsstift 47, dass der Führungsstift 47 sich auf einer Steuerbahn 50 bewegt, bis er an einen Endbereich 48 der Steuerkurve 45 gelangt.

An dem Endbereich 48 bewegt sich der Führungsstift 47 von der Steuerbahn 50 auf eine Steuerbahn 51, welche abschnittsweise von der Steuerbahn 50 mittels einer Wand 52 der Steuerkurve 45 getrennt ist, um einen Wechsel des Führungsstiftes 47 zwischen den Steuerbahnen 50 und 51 zu verhindern. Bei dieser Bewegung wird über den Lenker 46 der Riegel 20' in die Löseposition außer Eingriff mit dem Rad 17' bewegt.

Wird die Armauflage 12' aus der Position gemäß Fig. 18 weiter in Richtung u1 in die Position gemäß Fig. 19 bewegt, so dass sich das Zahnrad 16 an dem Endbereich 40 der Zahnstruktur 29 befindet, verhindern nicht dargestellte, zusammenwirkende Anschläge der Armauflage 12' und des Zahnkreissegments 15 eine weitere Bewegung des Zahnrades 16 in Richtung u1 relativ zu der Zahnstruktur 15, so dass das Zahnkreissegment 15 entgegen der Kraft der nicht dargestellten Andrückmittel um die Schwenkachse a1 in Richtung u1 schwenkt und den Kontakt zu der Wand 38 verliert. Die Armauflage 12' kann in Richtung u1 geschwenkt werden, bis der Anschlag 44 der Armauflage 12' und der Anschlag 43 der Basis 11 in der oberen Endposition gemäß Fig. 21 eine weitere Bewegung in Richtung u1 verhindern.

Eine Rückbewegung der Armauflage 12` in Richtung u2 kann dann ohne Weiteres erfolgen, bis das Zahnkreissegment 15 wieder mit der Wand 38 in Kontakt gerät. Die Armauflage 12' befindet sich dann wieder in der Position gemäß Fig. 19. Da sich bei der Bewegung der Armauflage 12' in die Endposition gemäß Fig. 21 und zurück zu der Position gemäß Fig. 19 nichts an der Position des Rades 17' und der Löseposition des Riegels 20' geändert hat, kann die Armauflage 12' weiter in Richtung u2 bewegt werden, wobei das Zahnrad 16 auf dem Zahnkreissegment 15 abrollt und sich das Rad 17' dabei entsprechend mitdreht.

Wenn die untere Endposition der Armauflage 12' gemäß Fig. 20 erreicht ist, befindet sich das Zahnrad 16 an einem Endbereich 39 der Zahnstruktur 29. Die Anschläge 43 und 44 verhindern in der unteren Endposition eine weitere Bewegung der Armauflage 12' in Richtung u2. Das Rad 17' hat sich dabei soweit relativ zu dem Führungsstift 47 gedreht, dass dieser sich an einem Endbereich 49 der Steuerkurve 45 befindet, was zur Folge hat, dass sich der Führungsstift 47 von der Steuerbahn 51 auf die Steuerbahn 50 bewegt. Bei dieser Bewegung des Führungsstiftes 47 wird über den Lenkbereich 46 der Riegel 20' in die Riegelposition bewegt. Eine Bewegung der Armauflage 12' in Richtung u1 ist in der Riegelposition wieder möglich, wobei sich das Rad 17' mit Schlupf relativ zu dem Vorsprung 35 bewegt, eine Bewegung der Armauflage 12' in Richtung u2 wird hingegen verhindert.

Es sei noch erwähnt, dass die Armauflage 12' aus der Position gemäß Fig. 19, in welcher sich die Verriegelungsvorrichtung 14' in die Löseposition bewegt hat, selbstverständlich auch unmittelbar in Richtung u2 schwenkbar ist.

Die aus dem dritten Ausführungsbeispiel bekannte Steuerung kann zusätzlich oder alternativ zu der manuellen Betätigung auch bei der Ausführungsform der Armlehne gemäß dem zweiten Ausführungsbeispiel eingesetzt werden.

## Patentansprüche

1. Ausstattungsvorrichtung für ein Fahrzeug welches eine Basis (11) sowie ein um eine Schwenkachse (a1) in eine erste Schwenkrichtung (u1) und in eine zweite Schwenkrichtung (u2) zwischen einer ersten Endposition und einer zweiten Endposition relativ zu der Basis (11) schwenkbares Schwenkteil (12) umfasst, mit einer Verriegelungsvorrichtung (14) mit ersten Verriegelungsmitteln (18) und zweiten Verriegelungsmitteln (19) zum Verriegeln der Schwenkbewegung des Schwenkteils (12) in wenigstens eine Richtung, mit einer Betätigungsvorrichtung (42) zum automatischen und / oder manuellen Verstellen der Verriegelungsvorrichtung (14) zwischen einer Riegelposition, in welcher die ersten Verriegelungsmittel (18) und die zweiten Verriegelungsmittel (19) in Eingiff sind und einer Löseposition, in welcher die Verriegelungsmittel (18, 19) außer Eingriff sind, **dadurch gekennzeichnet, dass** die einen Verriegelungsmittel wenigstens ein um eine Drehachse (a2) drehbares Rad (17) mit ersten Sperrflächen umfassen, wobei die Basis (11) oder das Schwenkteil (12) erste Übertragungsmittel umfasst, die mit zweiten Übertragungsmitteln des Rades in Eingriff stehen, um bei einer Schwenkbewegung des Schwenkteils (12) eine Drehung des Rades (17) zu bewirken, und die anderen Verriegelungsmittel wenigstens einen zwischen der Riegelposition und der Löseposition bewegbaren Riegel (20) mit zweiten Sperrflächen umfassen, welche in der Riegelposition in Eingriff und in der Löseposition außer Eingriff mit den ersten Sperrflächen sind.

2. Ausstattungsvorrichtung nach Anspruch 1, **dadurch gekennzeichnet, dass** die einen Sperrflächen (32, 34), die ersten Sperrflächen oder die zweiten Sperrflächen, wenigstens eine V-förmig konkave Flächenstruktur (32) und die anderen Sperrflächen (34, 32), die zweiten Sperrflächen oder die ersten Sperrflächen, wenigstens eine V-förmig konvexe Flächenstruktur (34) aufweisen, wobei die Winkel der V-förmigen Flächenstrukturen derart ausgebildet sind, dass bei einem Eingriff der ersten Sperrflächen und der zweiten Sperrflächen eine Keilwirkung entsteht.

3. Ausstattungsvorrichtung nach einem der vorangehenden Ansprüche, **dadurch gekennzeichnet, dass** die ersten Sperrflächen und die zweiten Sperrflächen von zusammenwirkenden Reibflächen gebildet sind.

4. Ausstattungsvorrichtung nach einem der vorangehenden Ansprüche, **dadurch gekennzeichnet, dass** die ersten Übertragungsmittel von einer ersten Zahnstruktur (29) und die zweiten Übertragungsmittel von einer zweiten Zahnstruktur (30) gebildet ist.

5. Ausstattungsvorrichtung nach Anspruch 4, **dadurch gekennzeichnet, dass** wenigstens eine der Zahnstrukturen als Zahnrad (16) oder als Zahnsegment (15) ausgebildet ist.

6. Ausstattungsvorrichtung nach Anspruch 4 oder 5, **dadurch gekennzeichnet, dass** eine der Zahnstrukturen (29) bewegbar ausgebildet ist und eine Anschlagfläche (36) aufweist, die von einer Rückstellvorrichtung gegen eine Gegenfläche (37) der Basis (11) belastet ist.

7. Ausstattungsvorrichtung nach einem der vorangehenden Ansprüche, **dadurch gekennzeichnet, dass** in der ersten Endposition und / oder in der zweiten Endposition eine Anschlagfläche (40, 43) des Schenkbarenteils (12) mit einer Begrenzungsfläche (41, 44) der Basis (11) in Kontakt steht.

8. Ausstattungsvorrichtung nach einem der vorangehenden Ansprüche, **dadurch gekennzeichnet, dass** die Betätigungsvorrichtung (42) eine von einem Benutzer außen an der Ausstattungsvorrichtung betätigbare Betätigung (26) aufweist, mit welcher die Verriegelungsvorrichtung (14) zwischen der Riegelposition und der Löseposition verstellbar ist.

9. Ausstattungsvorrichtung nach einem der vorangehenden Ansprüche, **dadurch gekennzeichnet, dass** die Betätigungsvorrichtung eine Steuerung umfasst, mit der Basis (11) zugeordneten ersten Steuermitteln und dem Schwenkteil (12) zugeordneten zweiten Steuermitteln, wobei mit der Steuerung die Verriegelungsvorrichtung zwischen der Riegelposition und der Löseposition bewegbar ist und derart ausgebildet ist, dass das Schwenkteil (12) in der Riegelposition bei einer Bewegung in die erste Schwenkrichtung (u1) aufgrund eines richtungsabhängigen Schlupfes zwischen dem Riegel (20') und dem Rad (17) frei bewegbar ist und eine Bewegung in die zweite Schwenkrichtung (u2) verhindert wird, wobei bei einer Bewegung des Schwenkteils (12) in die erste Schwenkrichtung (u1) über einen ersten Umkehrpunkt hinaus das Schwenkteil (12) aufgrund einer Verstellung der Verriegelungsvorrichtung in die Löseposition in die zweite Schwenkrichtung (u2) schwenkbar ist, bis das Schwenkteil (12) einen zweiten Umkehrpunkt passiert.

10. Ausstattungsvorrichtung nach einem der vorangehenden Ansprüche, **dadurch gekennzeichnet, dass** die Übertragungsmittel derart ausgebildet sind, dass die Drehung des Rades (17) proportional zu der Schwenkbewegung des Schwenkbarenteils (12) erfolgt.

11. Ausstattungsvorrichtung nach einem der vorangehenden Ansprüche, **dadurch gekennzeichnet, dass** die Ausstattungsvorrichtung eine Armlehne (10) und das Schwenkteil eine schwenkbare Armauflage ist.

## Claims

1. Equipment device for a vehicle which comprises a base (11) and a pivot member (12) that can be pivoted around a pivot axle (a1) in a first pivot direction (u1) and a second pivot direction (u2) between a first end position and a second end position, relative to the base (11), having a locking device (14) with first locking means (18) and second locking means (19) for locking the pivoting movement of the pivot member (12) in at least one direction, having an actuation device (42) for automatically and/or manually adjusting the locking device (14) between a locked position, in which the first locking means (18) and the second locking means (19) are engaged, and a released position, in which the locking means (18, 19) are disengaged, **characterised in that** the one locking means comprises at least one wheel (17) with first locking surfaces, rotatable around a rotation axle (a2), wherein the base (11) or the pivot member (12) comprises first transmission means, which is engaged with second transmission means of the wheel, in order to cause a rotation of the wheel (17) with a pivoting movement of the pivot member (12), and the other locking means comprise at least one bolt (20), moveable between the locked position and the released position, with second locking surfaces, which are engaged in the locked position and are disengaged in the released position with the first locking surfaces.

2. Equipment device according to claim 1, **characterised in that** the one locking surface (32, 34), the first locking surfaces or the second locking surfaces, have at least one V-shaped concave surface structure (32) and the other locking surfaces (34, 32), the second locking surfaces or the first locking surfaces, have at least one V-shaped convex surface structure (34), wherein the angles of the V-shaped surface structures are designed in such a way that a wedge effect is created when the first locking surfaces and the second locking surfaces engage.

3. Equipment device according to one of the preceding claims, **characterised in that** the first locking surfaces and the second locking surfaces are formed by interacting friction surfaces.

4. Equipment device according to one of the preceding claims, **characterised in that** the first transmission means is formed from a first tooth structure (29) and the second transmission means is formed from a second tooth structure (30).

5. Equipment device according to claim 4, **characterised in that** at least one of the tooth structures is designed as a gear (16) or as a toothed segment (15).

6. Equipment device according to claim 4 or 5, **characterised in that** one of the tooth structures (20) is designed in a moveable manner and has an abutment surface (36), which is loaded by a reset device against a counter face (37) of the base (11).

7. Equipment device according to one of the preceding claims, **characterised in that**, in the first end position and/or the second end position, an abutment surface (40, 43) of the pivot member (12) is in contact with a boundary surface (41, 44) of the base (11).

8. Equipment device according to one of the preceding claims, **characterised in that** the actuation device (42) has an actuation (26) which can be actuated by a user outside the equipment device, with which the locking device (14) can be adjusted between the locked position and the released position.

9. Equipment device according to one of the preceding claims, **characterised in that** the actuation device comprises a control, with first control means assigned to the base (11) and second control means assigned to the pivot member (12), wherein the locking device can be moved between the locked position and the released position with the control and is designed in such a way that the pivot member (12) can be freely moved in the locked position during a movement into the first pivot direction (u1) based on a direction-dependent slip between the bolt (20') and the wheel (17), and a movement into the second pivot direction (u2) is prevented, wherein, during a movement of the pivot member (12) into the first pivot direction (u1) beyond a first turning point, the pivot member (12) can be pivoted, based on an adjustment of the locking device, into the released position in the second pivot direction (u2), until the pivot member (12) passes a second turning point.

10. Equipment device according to one of the preceding claims, **characterised in that** the transmission means is designed in such a way that the rotation of the wheel (17) takes place proportionally to the pivoting movement of the pivot member (12).

11. Equipment device according to one of the preceding claims, **characterised in that** the equipment device is an armrest (10) and the pivot member is a pivotable arm support.

## Revendications

1. Dispositif d'équipement pour véhicule comprenant une base (11) et une partie pivotante (12) capable de pivoter autour d'un axe de pivotement (a1) dans une première direction de pivotement (u1) et dans une seconde direction de pivotement (u2) entre une première position d'extrémité et une seconde position d'extrémité par rapport à la base (11), comprenant un dispositif de verrouillage (14) présentant des premiers moyens de verrouillage (18) et des seconds moyens de verrouillage (19) pour verrouiller le mouvement de pivotement de la partie pivotante (12) dans au moins une direction, et comprenant un dispositif d'actionnement (42) pour le déplacement automatique et/ou manuel du dispositif de verrouillage (14) entre une position de verrouillage, dans laquelle les premiers moyens de verrouillage (18) et les seconds moyens de verrouillage (19) sont engagés, et une position de libération, dans laquelle les moyens de verrouillage (18, 19) sont désengagés, **caractérisé en ce que** les premiers moyens de verrouillage comprennent au moins une roue (17) capable de tourner autour d'un axe de rotation (a2) et présentant des premières surfaces de blocage, dans lequel la base (11) ou la partie pivotante (12) comprend des premiers moyens de transmission qui s'engagent avec des seconds moyens de transmission de la roue afin de déclencher une rotation de la roue (17) en cas de mouvement de pivotement de la partie pivotante (12), et dans lequel les autres moyens de verrouillage comprennent au moins un verrou (20) qui est déplaçable entre la position de verrouillage et la position de libération et qui présente des secondes surfaces de blocage qui sont engagées avec les premières surfaces de blocage dans la position de verrouillage et qui sont désengagées de celles-ci dans la position de libération.

2. Dispositif d'équipement selon la revendication 1, **caractérisé en ce que** des premières surfaces de blocage (32, 34), soit les premières surfaces de blocage soit les secondes surfaces de blocage, présentent au moins une structure de surface concave en forme de V (32), et les autres surfaces de blocage (34, 32), soit les secondes surfaces de blocage soit les premières surfaces de blocage, présentent au moins une structure de surface convexe en forme de V (34), dans lequel les angles des structures de surface en forme de V sont formés de telle sorte qu'un effet de calage se produit en cas d'engagement des premières surfaces de blocage et des secondes surfaces de blocage.

3. Dispositif d'équipement selon l'une quelconque des revendications précédentes, **caractérisé en ce que** les premières surfaces de blocage et les secondes surfaces de blocage sont formées par des surfaces de frottement coopérantes.

4. Dispositif d'équipement selon l'une quelconque des revendications précédentes, **caractérisé en ce que** les premiers moyens de transmission sont constitués par une première structure dentée (29) et les seconds moyens de transmission sont constitués par une seconde structure dentée (30).

5. Dispositif d'équipement selon la revendication 4, **caractérisé en ce qu'**au moins une des structures dentées se présente sous la forme d'une roue dentée (16) ou d'un segment denté (15).

6. Dispositif d'équipement selon la revendication 4 ou 5, **caractérisé en ce que** l'une des structures dentées (29) est mobile et présente une surface de butée (36) qui est sollicitée par un dispositif de rappel contre une contre-surface (37) de la base (11).

7. Dispositif d'équipement selon l'une quelconque des revendications précédentes, **caractérisé en ce que**, dans la première position d'extrémité et/ou dans la seconde position d'extrémité, une surface de butée (40, 43) de la partie pivotante (12) est en contact avec une surface de délimitation (41, 44) de la base (11).

8. Dispositif d'équipement selon l'une quelconque des revendications précédentes, **caractérisé en ce que** le dispositif d'actionnement (42) comprend une commande (26) actionnable par un utilisateur à l'extérieur du dispositif d'équipement et qui permet de déplacer le dispositif de verrouillage (14) entre la position de verrouillage et la position de libération.

9. Dispositif d'équipement selon l'une quelconque des revendications précédentes, **caractérisé en ce que** le dispositif d'actionnement comprend une commande, qui présente des premiers moyens de commande associés à la base (11) et des seconds moyens de commande associés à la partie pivotante (12), dans lequel la commande permet de déplacer le dispositif de verrouillage entre la position de verrouillage et la position de libération et est configurée de telle sorte que la partie pivotante (12) puisse être déplacée librement dans la position de verrouillage en cas de déplacement dans la première direction de pivotement (u1) en raison d'un glissement directionnel entre le verrou (20') et la roue (17), et qu'un déplacement dans la seconde direction de pivotement (u2) soit empêché, et dans lequel, lorsque la partie pivotante (12) est déplacée dans la première direction de pivotement (u1) au-delà d'un premier point d'inversion, la partie pivotante (12) est capable de pivoter dans la seconde direction de pivotement (u2) en raison d'un déplacement du dispositif de verrouillage dans la position de libération, jusqu'à ce que la partie pivotante (12) franchisse un second point d'inversion.

10. Dispositif d'équipement selon l'une quelconque des revendications précédentes, **caractérisé en ce que** les moyens de transmission sont conçus de telle sorte que la rotation de la roue (17) soit proportionnelle au mouvement de pivotement de la partie pivotante (12).

11. Dispositif d'équipement selon l'une quelconque des revendications précédentes, **caractérisé en ce que** le dispositif d'équipement est un accoudoir (10) et la partie pivotante est un repose-bras pivotant.
